# EUROPÄISCHE PATENTSCHRIFT

(11) **EP 3 424 287 B1**
(45) Veröffentlichungstag und Bekanntmachung des Hinweises auf die Patenterteilung: **02.09.2020**
(21) Anmeldenummer: 18179028.8
(22) Anmeldetag: 21.06.2018
(51) Int. Cl.: A01B 63/111

(54) **VORRICHTUNG UND VERFAHREN ZUR REGELUNG DES BETRIEBS EINES HYDRAULISCH BETÄTIGBAREN ANBAUGERÄTS AN EINEM FAHRZEUG**
DEVICE AND METHOD FOR CONTROLLING THE OPERATION OF A HYDRAULICALLY ACTUATED TOWING DEVICE ON A VEHICLE
DISPOSITIF ET PROCÉDÉ DE RÉGLAGE DU FONCTIONNEMENT D'UN OUTIL PORTÉ HYDRAULIQUE POUR UN VÉHICULE

(30) Priorität: 04.07.2017 DE 102017211329
(43) Veröffentlichungstag der Anmeldung: 09.01.2019
(73) Patentinhaber: Robert Bosch GmbH, 70442 Stuttgart (DE)
(72) Erfinder: Fassnacht, Jochen, 75365 Calw (DE); Rose, Steffen, 71638 Ludwigsburg (DE); Becker, Gernot, 70565 Stuttgart (DE); Buchtala, Boris, 75417 Muehlacker (DE); Link-Dolezal, Johanna, 73770 Denkendorf (DE)

(56) Entgegenhaltungen:
- EP-A1- 3 146 822
- GB-A- 2 318 652
- US-A- 6 041 582
- US-B1- 8 849 523

## Beschreibung

Die vorliegende Erfindung betrifft eine Vorrichtung für ein Fahrzeug, insbesondere einen Traktor, mit einer hydraulischen Betätigungseinheit zur Regelung des Betriebs eines Anbaugeräts an dem Fahrzeug, sowie ein hierfür geeignetes Betriebsverfahren. Insbesondere findet die Erfindung Anwendung bei einem Traktor, einem landwirtschaftlichen Ackerschlepper, einer mobilen Arbeitsmaschine zur Feldbearbeitung oder dergleichen. Ackerschlepper bzw. Traktoren werden als universell einsetzbare Arbeitsmaschinen vorrangig in der Landwirtschaft zur Bearbeitung von Böden eingesetzt.

Das Pflügen als eine der häufigsten Anwendungen stellt hohe Anforderungen an den Antriebsstrang und die Regelgüte der elektrohydraulischen Hubwerksregelung (EHR). Vor allem bei stark inhomogenen oder sehr feuchten Böden besteht aufgrund einer sehr großen Widerstandskraft am Pflug die Möglichkeit, dass der Traktor stecken bleiben oder der Verbrennungsmotor abgewürgt werden kann. Zusätzlich zu einer Lagereglung des Pflugs versucht die Zugkraftregelung ein Abwürgen des Motors zu verhindern, indem die Zugkraft z. B. am traktorseitigen Gelenk des Unterlenkers gemessen und diese auf einen vom Bediener vorgegebenen Wert geregelt wird, welcher ein Abwürgen des Motors verhindert bzw. eine Reduzierung des Schlupfes der Antriebsräder bewirkt. Dies geschieht üblicherweise durch ein (kurzzeitiges) Anheben des Pflugs und der daraus resultierenden Verringerung der Widerstandskraft des Pflugs. Aufgrund der Tatsache, dass die Kraft auf den Pflugschar unter anderem von der Eindringtiefe bzw. von der Pflugtiefe abhängt, kann die von einem Pflug erzeugte Kraft in erster Näherung auch als Indikator für die sich einstellende Pflugtiefe herangezogen werden. Sehr häufig kann aus diesem Grund die EHR bei relativ homogenen Böden im Modus Zugkraftregelung bzw. mit einem hohen Anteil des Verstärkungsfaktors für die Zugkraftregelung im Mischregelungsbetrieb betrieben werden.

Um bei stark inhomogenen Böden eine Verschlechterung des Pflugbildes durch ständiges zu starkes Heben und Absenken des Pfluges bei Nutzung der reinen Zugkraftregelung zu vermeiden, kann entweder vollständig auf Lage geregelt oder die Regelung mit einem hohen Anteil des Verstärkungsfaktors für die Lageregelung im Mischregelungsbetrieb betrieben werden. Bei sehr welligen und unebenen Böden kann das Pflugbild verbessert und der Komfort erhöht werden, wenn rein die Zugkraft des Pflugs geregelt wird, weil sich die Pflugtiefe über die variierende Zugkraft dem Bodenprofil besser anpasst als bei reiner Lageregelung.

Nach dem Stand der Technik resultiert die Änderung der Lage des Pfluges durch die alleinige Variation der Höhe des Anbaugerätes während des Pflügens. Für die Ermittlung der Zugkraft nach dem Stand der Technik sind in der Regel zwei Kraftmessbolzen in das Gelenk des Unterlenkers verbaut. Diese können die gesamte Widerstandskraft bzw. Pflugkraft aller am Pflugprozess beteiligten Pflugschare messen. Hierbei können teilweise Unebenheiten im Bodenverlauf (z. B. Hügel, Bodenwellen, Querfurchen) erkannt und diese aufgrund des sich ändernden Kraftverlaufs kompensiert werden.

Mit einem solchen bekannten Regelsystem ist es möglich, bei sich erhöhenden Verdichtungen im Boden, welche zu einer erhöhten Prozess- bzw. Pflugkraft führen, die Zugkraft konstant bzw. den Schlupf gering zu halten (Verringerung der Kraftstoffkosten), indem das Anbaugerät bei eingestellter Zugkraftregelung bzw. Mischregelung entsprechend ausgehoben wird.

Es wurde herausgefunden, dass es in manchen Fällen der Bodenverdichtung vorteilhaft wäre, ein weiteres Eindringen der Pflug- oder Grubberscharen zu bewirken, um die Bodenverdichtung aufzulösen und den Boden entsprechend aufzulockern. Vor allem bei sogenannten Schadverdichtungen kann die Auflockerung des Bodens zu einem besseren Bodenprofil und letztendlich zu einem erhöhten Ernteertrag führen.

Die Bodendichte kann dabei von den natürlichen Bedingungen (Bodentextur) und der Nutzung (Landnutzung, Verdichtung durch Befahren von schweren Maschinen) abhängig sein. Aus pflanzenbaulicher Sicht ist eine (schadhafte) Bodenverdichtung nach Möglichkeit zu vermeiden, weil diese in der Regel zu schlechteren Wachstumsbedingungen im Feld führt. Auch wenn die geschilderten Ansätze für den Betrieb solcher Traktoren bzw. Ackerschlepper bereits gute Ergebnisse liefern, so sind die verfügbaren Systeme gleichwohl teilweise zu komplex und damit zu kostenintensiv, nicht ausreichend verlässlich und/oder zu ungenau. Insoweit besteht insbesondere bei der Vermeidung bzw. Auflösung von Schadverdichtungen Bedarf an Verbesserungen.

Aus der EP 3146822 A1 sind eine Vorrichtung und ein Verfahren zur Regelung des Betriebs eines hydraulisch betätigbaren Schleppgeräts an einem Fahrzeug bekannt. Hierbei ist eine Geschwindigkeitserfassungseinheit mit auf den Boden gerichteten Entfernungsbestimmungssensoren vorhanden. Aus der erfassten Geschwindigkeit des Fahrzeugs wird ein Antriebsschlupf bestimmt, wobei der Antriebsschlupf durch Betrieb einer hydraulischen Betätigungseinheit einstellbar ist.

Die US 8849523 B1 beschreibt ein Fahrzeug mit einer Arbeitseinrichtung zur Einbringung von Samen oder Pflanzen an vorbestimmten Orten in einen Erdboden, wobei ein Bodendichtesensor dem Fahrzeug zugeordnet ist, der die Dichte des Erdbodens erfasst. Hierbei ist vorgesehen, dass die Einbringung der Samen oder Pflanzen an den dafür vorbestimmten Orten des Erdbodens auf die Bodendichte abgestimmt ist.

Die GB 2318652 A1 bezieht sich auf die Erdbodenbearbeitung mit einem Pflug, dessen Weite in Abhängigkeit der dem Pflug entgegenstehenden Widerstandskraft des Erdbodens einstellbar ist.

Die US 6041582 A1 beschreibt ebenfalls die Bearbeitung eines Ackerbodens mit einem Pflug, wobei die Widerstandskraft des Erdbodens gegenüber dem Pflug durch Dehnungsmessstreifen oder Kraftmessbolzen erfasst wird.

Hiervon ausgehend ist es Aufgabe der vorliegenden Erfindung, eine Vorrichtung und ein Verfahren zu schaffen, die die genannten Nachteile lindern oder sogar vermeiden. Insbesondere soll auf konstruktiv einfache und für die Umgebungsbedingungen im Feld geeignete Art die Vermeidung bzw. Auflösung von Schadverdichtungen im Boden verbessert werden. Außerdem soll das Verfahren eine Auflockerung eines zu stark verdichteten Ackerbodens und/oder eine Verdichtung eines zu lockeren Ackerbodens ermöglichen.

Diese Aufgaben werden gelöst mit einer Vorrichtung und einem Verfahren gemäß den unabhängigen Patentansprüchen. Weitere Ausgestaltungen der Erfindung sind in den abhängigen Patentansprüchen angegeben. Es ist darauf hinzuweisen, dass die Beschreibung, insbesondere im Zusammenhang mit den Figuren, weitere Einzelheiten und Weiterbildungen der Erfindung anführt, die mit den Merkmalen aus den Patentansprüchen kombinierbar sind.

Hierzu trägt eine Vorrichtung für ein Fahrzeug mit einer hydraulischen Betätigungseinheit zur Regelung des Betriebs eines Anbaugeräts an dem Fahrzeug bei, umfassend eine elektrohydraulische Hubwerksregelung, eine Auswerteeinheit sowie datenleitende Verbindungen hin zu einer Fahrzeugsteuerung und einem der hydraulischen Betätigungseinheit zugeordneten Steuergerät, wobei mindestens ein Bodendichtesensor mit dem Steuergerät verbindbar ist.

Dabei handelt es sich bei dem Fahrzeug insbesondere um einen Traktor bzw. einen sogenannten Ackerschlepper. Als Anbaugerät wird insbesondere ein Pflug oder ein ähnliches Bodenbearbeitungsgerät angesehen. Das Anbaugerät kann von dem Fahrzeug geschoben und/oder gezogen werden.

Die hydraulische Betätigungseinheit umfasst bevorzugt ein Hubwerk mit einem Hubwerkszylinder für das Anbaugerät, das von der Auswerteeinrichtung aktivierbar ist. Hierfür sind insbesondere elektrische und/oder datenleitende Verbindungen zwischen Auswerteeinrichtung und hydraulischer Betätigungseinheit vorgesehen. Insbesondere sind die Auswerteeinheit und das Hubwerk so eingerichtet, dass die Auswerteeinheit mindestens eine Zustandsgröße einstellen und/oder auf ein Stellorgan des Hubwerks zugreifen kann. Hierbei kann das Anbaugerät zumindest über einen Unterlenker mit dem Fahrzeug verbunden sein. Der Unterlenker kann durch den hydraulisch verstellbaren Unterlenkerzylinder in seiner Höhe verstellt werden, so dass es möglich ist, das Anbaugerät in dieser Konstellation in seiner Höhe zu verstellen.

Die Auswerteeinheit kann ein separates (elektronisches) Aggregat sein, es ist aber auch möglich, dass die Auswerteeinheit Teil des Steuergeräts zur Ansteuerung der hydraulischen Betätigungseinheit selbst ist. Die (mindestens) eine datenleitende Verbindung zwischen Auswerteeinheit und Steuergerät kann kabelgebunden oder kabellos realisiert sein. Das Steuergerät und/oder die Auswerteeinheit können einer Fahrzeugsteuerung zugeordnet oder unabhängig davon eingerichtet sein. Die datenleitenden Verbindungen sind von der Auswerteeinheit hin zu der Fahrzeugsteuerung und hin zu dem Steuergerät vorgesehen.

Weiter ist mindestens ein Bodendichtesensor mit dem Steuergerät verbindbar, wobei diese Verbindung permanent oder zeitweise erfolgen kann. Mittels der Verbindung können beispielsweise mit dem Bodendichtesensor erfasste Messwerte und/oder daraus abgeleitete Parameter an das Steuergerät übermittelt werden. Eine entsprechende datenleitende Verbindung kann kabelgebunden oder über ein Funknetzwerk eingerichtet sein. Das Steuergerät kann eingerichtet sein, die Messwerte und/oder daraus abgeleitete Parameter aus dem Bodendichtesensor auszulesen und/oder zu speichern. Bevorzugt ist ein Bodendichtesensor an dem Fahrzeug montiert und zum Boden hin ausgerichtet. Der Bodendichtesensor ist insbesondere eingerichtet, den nachfolgend mittels des Anbaugerätes zu bearbeitenden Boden zu erfassen. Der Bodendichtesensor kann in Fahrrichtung des Fahrzeugs und/oder des Anbaugerätes vorausschauend angeordnet sein. Der Bodendichtesensor ist eingerichtet, die Dichte des Bodens im Erfassungsbereich zu bestimmen. Die Ermittlung der Bodendichte kann (zeitweise oder andauernd) durch Kontakt einer Messsonde mit dem Boden und/oder berührungslos (z. B. mittels Radar, Schallwellen, etc.) erfolgen. So könnten z. B. Radarsignale (elektromagnetische Wellen bzw. Funkwellen) direkt auf den Boden gerichtet und anhand unterschiedlicher Reflexionsgrade der wieder empfangenen Signale die Dichte bestimmt werden. Der Bodendichtesensor kann einen Messwertgeber und einen Messwertempfänger umfassen sowie eine Elektronik zur Steuerung und/oder Bewertung der Messung.

Mit der hier aufgezeigten Vorrichtung wird ein elektrohydraulisches Regelsystem für einen Ackerschlepper oder eine ähnlich relevante Maschine gleicher Funktionalität vorgestellt, welches es zusätzlich ermöglicht, bevorzugt durch ein weiteres Eindringen der Schare des Anbaugeräts eine Schadverdichtung aufzulösen und den Boden entsprechend aufzulockern. Hierbei ist neben dem EHR-System ein zusätzlicher Bodendichtesensor vorhanden, welcher in das EHR-System integriert wird und dessen online ermittelte Sensorsignale entsprechend einer geeigneten Regelstrategie ausgewertet werden können. Wesentlich ist die Auflockerung eines zu bearbeitenden Ackerbodens während des Pflügens mit einem entsprechend modifizierten EHR-System. Der zusätzliche Bodendichtesensor kann online die Verdichtung des Bodens bestimmen und entsprechende Daten dem EHR-Steuergerät zur Verfügung stellen.

Mit der hier vorgestellten Vorrichtung werden insbesondere folgende Vorteile erzielt:
- Erkennen einer Schadverdichtung und gleichzeitige Auflockerung des Ackerbodens durch eine weitere Absenkung des Anbaugeräts und somit einer weiteren Erhöhung der Eindringtiefe;
- Erkennen einer unerwünschten Auflockerung des Ackerbodens und Verfestigen und/oder Komprimieren des Bodens durch eine weitere Absenkung des Anbaugeräts;
- Verbesserung der Wachstumsbedingungen im Feld.

Das Steuergerät ist eingerichtet, die Regelstrategie der elektrohydraulischen Hubwerksregelung in Abhängigkeit von Signalen des Bodendichtesensors abzuwandeln. Vorzugsweise ist der Bodendichtesensor am Fahrzeug angeordnet. Der Bodendichtesensor kann starr oder schwenkbar am Fahrzeug (lösbar) befestigt sein. Es kann eine Schnittstelle vorgesehen sein, über die der montierte Bodendichtesensor mit der Auswerteeinheit kommuniziert.

Zweckmäßig ist eine Geschwindigkeitserfassungseinheit zur Ermittlung eines Antriebsschlupfes datenleitend mit der Auswerteeinrichtung verbunden. Die Geschwindigkeitserfassungseinheit umfasst z. B. zur Messung der Fahrzeugfahrgeschwindigkeit einen Geschwindigkeitssensor und der Antriebsgeschwindigkeit einen Drehzahlsensor.

Mit Vorteil umfasst die hydraulische Betätigungseinheit ein Hubwerk für das Anbaugerät, das von der Auswerteeinheit aktivierbar ist.

Bevorzugt weist die elektrohydraulische Hubwerkregelung einen doppelt wirkenden Hubwerkszylinder für den Unterlenker auf. Bei Nutzung einer doppelt wirkenden EHR ist weiterhin eine gezielte Verdichtung des Bodens mit speziellen Anbaugeräten möglich (z. B. bei der Nutzung von Packern nach der Saatgutausbringung).

Weitere Details der Vorrichtung ergeben sich auch aus der nachfolgenden Erläuterung zu dem Betriebsverfahren. Insbesondere können die Erläuterungen zu den Verfahren hier ergänzend herangezogen werden. Ebenso gilt, dass die vorstehenden Erläuterungen zur Vorrichtung die Beschreibung der Verfahren ergänzen können.

Weiter wird hier ein Verfahren zum Betrieb eines Fahrzeugs, insbesondere eines Traktors, mit einer hydraulischen Betätigungseinheit zur Regelung des Betriebs eines Anbaugeräts an dem Fahrzeug, wobei eine elektrohydraulische Hubwerksregelung mit einem Steuergerät vorhanden ist, vorgeschlagen. Das Verfahren kann insbesondere mit der hier ebenfalls vorgeschlagenen Vorrichtung durchgeführt werden, wobei die Auswerteeinheit dazu eingerichtet ist, das Verfahren durchzuführen.

Das Verfahren umfasst zumindest die folgenden Schritte:
a) Bestimmen einer Bodendichte mittels mindestens eines Bodendichtesensors während der Fahrt des Fahrzeugs,
b) Vergleichen der ermittelten Bodendichte mit einem Grenzwert,
c) Abwandeln der Regelstrategie der elektrohydraulischen Hubwerksregelung, wenn der Grenzwert erreicht ist.

Die Dichte des Bodens wird bestimmt und dem EHR-Steuergerät zur Verfügung gestellt. Die hieraus gewonnenen Messwerte und/oder Daten können in der Art ausgewertet und weiter verarbeitet werden, dass dem Fahrer bzw. dem Fahrzeugbediener (temporär) frei gestellt wird, die eigentliche Regelstrategie der EHR zu übersteuern und bei erkannter Schadverdichtung tiefer in den Boden einzudringen bzw. erkannten Bodenauflockerung den Boden stärker einzudrücken. Hierdurch kann die Bodendichte zielgerichtet angepasst werden, was wiederum zu besseren Wachstumsbedingungen im Feld führt.

Die Bestimmung der Bodenverdichtung mittels mindestens eines Bodendichtesensors wird gemäß Schritt a) während der Fahrt des Fahrzeugs durchgeführt. Die Bestimmung kann kontinuierlich und/oder zeitlich intermittierend erfolgen. Die Bodendichte ist insbesondere in einem mittels des Anbaugerätes zu bearbeitenden Bodenabschnitt zu ermitteln. Die Bodendichte wird insbesondere in einem Bodenabschnitt ermittelt, der noch nicht aber aufgrund der Fahrtrichtung des Fahrzeugs zeitnah bzw. unmittelbar bearbeitet wird. Die Fahrt des Fahrzeugs wird hierbei bevorzugt nicht unterbrochen.

Das Vergleichen der ermittelten Bodenverdichtung mit einem Grenzwert gemäß Schritt b) kann zumindest teilweise in der Auswerteeinheit vorgenommen werden. Hierfür können z. B. aktuell bestimmte Messwerte und/oder Daten des Bodendichtesensors mit vorgegebenen Grenzwerten verglichen und/oder gespeichert werden. Es ist möglich, dass ein oberer und/oder ein unterer Grenzwert für den Vergleich vorgegeben ist. Existieren ein oberer und ein unterer Grenzwert, dann ist bevorzugt nur im Zwischenbereich die (übliche bzw. bisherige) Regelstrategie anzuwenden.

Wird erkannt, dass der Grenzwert erreicht ist, erfolgt nach Schritt c) eine Abwandlung der (üblichen bzw. bisherigen) Regelstrategie der elektrohydraulischen Hubwerksregelung. Die Regelung kann so abgewandelt werden, dass ein ausgewählter oder vorbestimmter neuer Sollwert für die Regelung vorgegeben wird, insbesondere mit der Folge, dass eine vorgegebene Zustellung des Anbaugeräts hin zum Boden eintritt. Im Rahmen von Schritt c) kann noch eine Abfrage und/oder Informationsbereitstellung an den Fahrer ausgeführt werden, ggf. in Kombination mit einer (manuellen) Freigabe als notwendige vorherige Rückantwort zur vollständigen Ausführung von Schritt c).

Das System kann in der Art ausgelegt werden, dass dem Fahrer ein Signal gemeldet wird, wenn eine Schadverdichtung und/oder Bodenauflockerung erkannt wurde und er anschließend die Freigabe zur Übersteuerung der eigentlichen EHR-Strategie gibt und der Pflug bzw. das Anbaugerät weiter hin zum bzw. in den Boden bewegt kann. Es besteht die Möglichkeit, dass der Fahrer diese Funktionalität generell (für einen kompletten Arbeitsprozess bzw. bis zum Betriebsstopp) freigibt, so dass das EHR-System eine Schadverdichtung/Bodenauflockerung selbstständig erkennt und das Anbaugerät automatisch weiter absenkt. Dies ist dann insbesondere insoweit zulässig, soweit es die Leistungsreserve des Dieselmotors zulässt.

In Fällen, in denen ein weiteres Eindringen der Pflug- oder Grubberscharen gewünscht ist, um die Bodenverdichtung aufzulösen und den Boden entsprechend aufzulockern, kann die Auflockerung des Bodens zu einem besseren Bodenprofil und letztendlich zu einem erhöhten Ernteertrag führen. Das weitere Eindringen der Pflugschare bei sich erhöhenden Bodenverdichtungen (Schadverdichtungen) entspräche jedoch diametral der Regelstrategie eines (bekannten) EHR-Systems bei eingeschalteter Zugkraft- bzw. Mischregelung. Wenn hier pflanzenbauliche Ziele über den direkt erfassbaren ökonomischen Zielen (Kraftstoffersparnis durch geringeren Schlupf) stehen, kann der Fahrzeugbediener in diesem Fall das EHR-Regelsystem übersteuern und/oder das EHR-Regelsystem kann entsprechend so ausgelegt sein, dass es eine Bodenverdichtung erkennt und das Anbaugerät entsprechend der Leistungsreserve des Dieselmotors soweit absenkt, dass eine signifikante Bodenauflockerung an dieser Stelle erreicht werden kann. Diese Strategie sollte vorher von dem Fahrzeugbediener eingestellt werden. Hierzu kann ein zusätzlicher Modus bei der Auswahl der entsprechenden Regelstrategie dienen.

Es ist möglich, dass ein Hubwerk des Anbaugeräts aktiviert wird, wenn der Grenzwert überschritten wird. Ist der Grenzwert eine Referenz für die Bodendichte, kann bei Überschreiten des Grenzwertes auf eine unerwünschte Verfestigung geschlossen werden. Dann kann die Regelstrategie (zur Vermeidung eines Aushebens des Anbaugerätes) so angepasst werden, dass trotz erhöhter Zugkraft (und damit einer Überschreitung der bisherigen Zugkraftgrenze) die Eindringtiefe beibehalten und/oder vergrößert wird. Das Verfahren kann so implementiert sein, dass bei Erreichen des Bodenabschnitts mit erhöhter Bodendichte das Anbaugerät abgesenkt und bei Verlassen des Bodenabschnitts mit erhöhter Bodendichte das Anbaugerät (gemäß vorheriger Regelstrategie) ausgehoben bzw. eingestellt wird.

Alternativ und/oder kumulativ (ggf. in Abhängigkeit der eingesetzten Anbaugeräte) ist möglich, dass ein Hubwerk des Anbaugeräts aktiviert wird, wenn der Grenzwert unterschritten wird. Ist der Grenzwert eine Referenz für die Bodendichte, kann bei Unterschreiten des Grenzwertes auf eine unerwünschte Auflockerung geschlossen werden. Dann kann die Regelstrategie so angepasst werden, dass mit einer Überschreitung der bisherigen Zugkraftgrenze die Anpresskraft des Anbaugerätes (z. B. bei so genannten Packern) hin zum Boden beibehalten und/oder vergrößert wird. Das Verfahren kann so implementiert sein, dass bei Erreichen des Bodenabschnitts mit zu niedriger Bodendichte das Anbaugerät abgesenkt und bei Verlassen des Bodenabschnitts mit zu niedriger Bodendichte das Anbaugerät (gemäß vorheriger Regelstrategie) ausgehoben bzw. eingestellt wird.

Wird mittels des mindestens einen Bodensensors erkannt, dass nunmehr die Bodendichte wieder im erwarteten bzw. üblichen Bereich liegt, kann Schritt c) rückgängig gemacht werden.

Durch das modifizierte EHR-System wird das Anbaugerät, z. B. ein Pflug, bei Überschreitung des Grenzwertes nicht angehoben. Zweckmäßig wird das Anbaugerät abgesenkt. Es ist möglich, dass eine zusätzliche Zustellung hin zum Boden im Bereich von 5 bis 10 cm eingestellt wird.

Mit Vorteil umfasst die Abwandlung der Regelstrategie gemäß Schritt c) eine Änderung zumindest der (zulässigen) Zugkraft, der Größe des Schlupfwertes oder des Motordrehmoments. Die Regel-Zugkraft und/oder das Regel-Motordrehmoment kann beispielsweise um mindestens 5 % oder sogar mindestens 10 % angehoben werden. Der Regel-Schlupfwert kann beispielsweise um mindestens 2 % oder sogar mindestens 8 % angehoben werden. Die maximale Anhebung der Regelgröße erfolgt unter Berücksichtigung der Leistungsreserve des Antriebsaggregats des Fahrzeugs, so dass die Fortsetzung der Fahrt weiterhin gewährleistet werden kann.

Das Hubwerk wird im Rahmen von Schritt c) durch das Steuergerät automatisch aktiviert.

Die hier aufgezeigte Anordnung und/oder Methode bietet insbesondere die Vorteile, dass die Bestimmung der Verdichtung des Ackerbodens zur Vermeidung bzw. Auflösung von Schadverdichtungen mittels des Bodendichtesensors in verlässlicher, genauer und technisch einfacher Weise realisiert ist.

Die Erfindung und das technische Umfeld werden nachfolgend anhand von Figuren näher erläutert. Dabei sind gleiche Bauteile mit gleichen Bezugszeichen gekennzeichnet. Die Darstellungen sind schematisch und nicht zur Veranschaulichung von Größenverhältnissen vorgesehen. Die mit Bezug auf einzelne Details einer Figur angeführten Erläuterungen sind extrahierbar und mit Sachverhalten aus anderen Figuren oder der vorstehenden Beschreibung frei kombinierbar, es sei denn, dass sich für einen Fachmann zwingend etwas anderes ergibt bzw. eine solche Kombination explizit untersagt wird. Es zeigen:
- Fig. 1:: schematisch eine Seitenansicht eines Traktors mit einer hydraulischen Betätigungseinheit zur Regelung des Betriebs eines Anbaugeräts, umfassend einen Bodendichtesensor,
- Fig. 2:: ein Blockschaltbild, wobei der Bodendichtesensor mit einem Steuergerät elektrisch in Verbindung steht,
- Fig. 3a:: schematische Darstellung eines Traktors mit angebautem Pflug beim Pflügen eines Ackerbodens und Bestimmen von Schadverdichtungen und
- Fig. 3b:: eine Darstellung des Traktors mit angebauten Pflug wie Fig. 3a, jedoch beim Pflügen eines Ackerbodens und Auflösen von Schadverdichtungen.

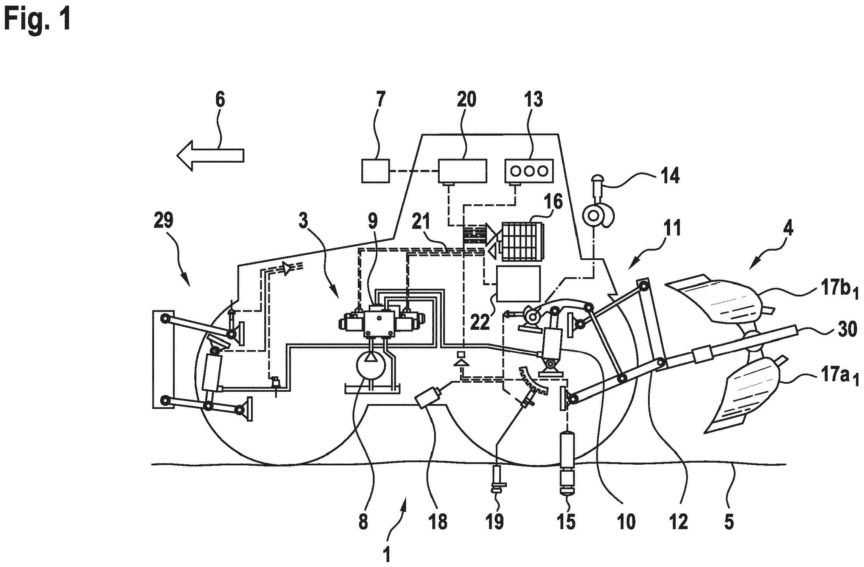

Fig. 1 zeigt die prinzipielle Darstellung der hier angegebenen Vorrichtung 1 an einem Fahrzeug 2, insbesondere nach Art eines Traktors bei der Bodenbearbeitung mit einem Schleppgerät, insbesondere mit einem Pflug. Dabei zieht das Fahrzeug 2 bei einer Fahrt in Fahrtrichtung 6 das Anbaugerät 4 hinter sich her und durch die Oberschicht des Bodens 5.

Weiterhin zeigt Fig. 1 die prinzipielle Darstellung des EHR-Systems mit integriertem Bodendichtesensor 7 im Sinne des vorgeschlagenen Regelsystems.

Mit Blick auf die Wirkungsweise des EHR-Systems fördert eine Hydropumpe 8 einen Ölstrom zu einem Regelventil 9, welches einen Hubwerkszylinder 10 steuert. Dieser wirkt auf die Unterlenker 12, wodurch das Anbaugerät 4 gehoben, gehalten oder abgesenkt werden kann. Der Sollwert wird über ein Bedienteil 13, die Istwerte werden über Sensoren (Lagesensor 14 und Kraftsensor 15) erfasst und einem elektronischen Steuergerät 16 zugeführt. Die aus dem Soll-Ist-Vergleich resultierende Regelabweichung wird im Steuergerät 10 aufbereitet und an das Regelventil 9 weitergeleitet. Das Heben- und Senkventil wird über zwei Proportionalmagnete verstellt.

Mit der elektrohydraulischen Hubwerksregelung sind im Normalmodus u. a. folgende verschiedene Betriebsarten möglich:
Lageregelung:
   Hierbei ist die Regelgröße die Lage (insbesondere die Höhenlage) des Hubwerks 11. Ein Lagesensor 14, der von einer Kurvenscheibe am Hubwerk 11 betätigt wird, liefert den Istwert.
Zugkraftregelung:
   Hierbei ist die Regelgröße die an den Unterlenkern 12 wirkende Kraft. Wird diese konstant gehalten, ist eine sinnvolle Auslastung der Schlepperleistung, etwa beim Pflügen in welligem Gelände und bei inhomogenem Boden, gegeben. Der Istwert wird von Kraftsensoren 15 gemessen. Das Regeln der Zugkraft erfolgt durch Veränderung der Arbeitstiefe des Anbaugeräts 4 (z. B. Pflug).
Mischregelung:
   Hierbei werden die Regelabweichungen von Lage und Zugkraft in einem einstellbaren Verhältnis am Bedienteil 13 gemischt und als Regelgröße verarbeitet. Mit der Mischregelung können Veränderungen der Arbeitstiefe aufgrund unterschiedlicher Bodenwiderstände, wie sie sich aus der reinen Zugkraftregelung ergeben, reduziert werden.
Schlupfregelung:
   Die Schlupfregelung wird durch Messung der wahren Fahrgeschwindigkeit (Geschwindigkeitssensor 18) und der Antriebsgeschwindigkeit (Drehzahlsensor 19) realisiert. Aus einem Unterschied wird auf (teilweise) durchdrehende Räder geschlossen (Schlupf).

Der Bodendichtesensor 7 gemäß Fig. 1 ist datenleitend an eine elektronische Auswerteeinheit 20 angeschlossen. Es sind datenleitende Verbindungen 21 u. a. von der Auswerteeinheit 20 hin zu einer Fahrzeugsteuerung 22 und zu dem der hydraulischen Betätigungseinheit 3 zugeordneten Steuergerät 16 vorhanden.

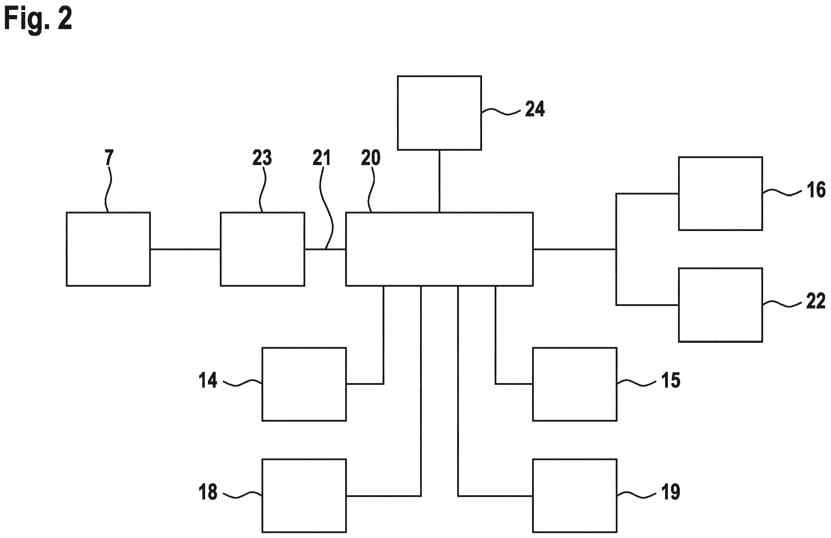

Nach Fig. 2 steht ein Messwertwandler 23 mit dem Bodendichtesensor 7 und der Auswerteeinheit 20 elektrisch in Verbindung. Der Messwertwandler 23 wandelt die Bodendichtewerte des Bodendichtesensors 7 in elektrische Impulse um. An die Auswerteeinheit 20 ist ein Vergleichselement 24 angeschlossen, das einen Vergleich der ermittelten Bodendichte mit einem Grenzwert bzw. einer Referenzbodendichte durchführt. Das Vergleichselement 24 kann in die Auswerteeinheit 20 integriert sein. Weiterhin sind an die Auswerteeinheit 20 ein Lageerfassungssensor 14, ein Kraftsensor 15, ein Geschwindigkeitssensor 18 und ein Drehzahlsensor 19 angeschlossen. Schließlich steht die Auswerteeinheit 20 mit dem Steuergerät 16 und der Fahrzeugsteuerung 22 elektrisch datenleitend in Verbindung.

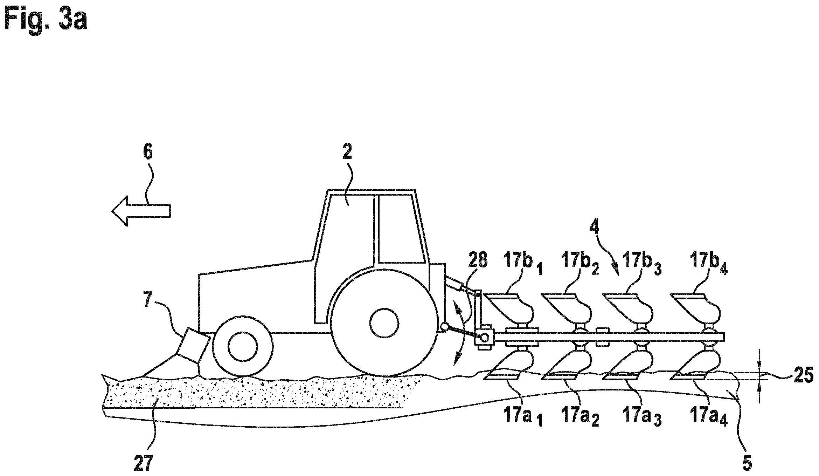

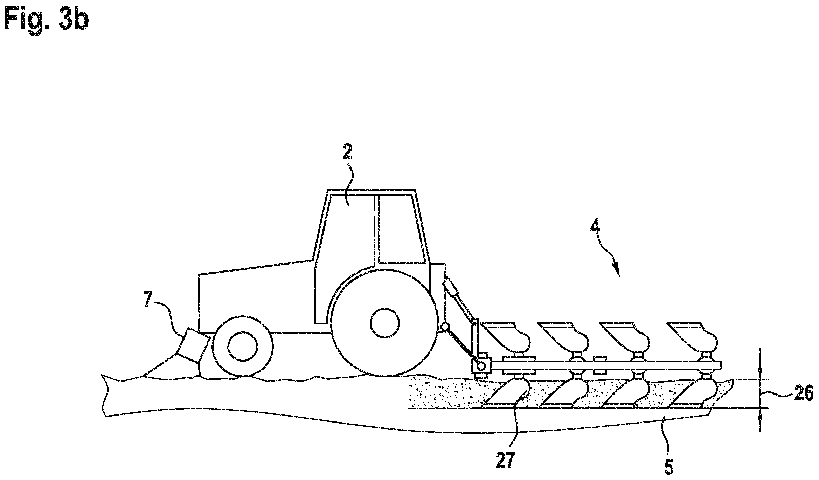

Die Figuren 3a und 3b zeigen das Fahrzeug 2 während der die Bodenstruktur auflockernden Bodenbearbeitung (hier Pflügen) des Ackerbodens sowie eine schematische Darstellung des Fahrzeugs 2 (Ackerschlepper) während des Pflügens mit einem EHR-System. Hierbei ist der Pflug über den hydraulisch verstellbaren Unterlenker 12 mit dem Traktor verbunden. Der Unterlenker 12 ist durch den Hubwerkszylinder 10 (s. Fig. 1) in der Höhenrichtung 28 verstellbar. Der Bodendichtesensor 7 ist in Fahrtrichtung 6 an der Front des Fahrzeugs 2 angeordnet und auf den Boden 5 gerichtet. Mit 17a₁ bis 17a₄ sind Pflugscharen unterhalb eines drehbaren Trägers 30 und mit 17b₁ bis 17b₄ sind Pflugscharen oberhalb des drehbaren Trägers 30 bezeichnet.

Fig. 3a zeigt den Traktor mit angebautem Pflug beim Pflügen eines Bodens 5 während der Bestimmung von Schadverdichtungen. Hierbei arbeitet das EHR-System im Normalmodus. Die Pflugscharen 17a₁ bis 17a₄ dringen mit einer ersten Eindringtiefe 25 in den Boden ein. Der in Fahrtrichtung 6 vor dem Anbaugerät 4 angeordnete Bodendichtesensor 7 ermittelt erhöhte Bodenverdichtungen 27 (Schadverdichtungen).

In Fig. 3b ist der Traktor mit angebautem Pflug beim Pflügen eines Bodens während der Auflösung von (schematisch dargestellten) erhöhten Bodenverdichtungen 27 (Schadverdichtungen) dargestellt. Das EHR-System ist hierbei abgewandelt, d. h. es arbeitet nicht im Normalmodus. Die Pflugscharen 17a₁ bis 17a₄ sind mit einer zweiten Eindringtiefe 26 tiefer in den Boden 5 eingedrungen, um die Bodenverdichtungen 27 aufzulösen. Wie zu erkennen ist, erfolgt die Auflösung der Bodenverdichtung 27 gemäß Fig. 3b während der Fahrt gegebenenfalls in einem Zeitversatz nach der Bestimmung der Bodenverdichtungen 27 nach Fig. 3a.

Die Erfindung wurde am Beispiel eines Pflugs näher erläutert. Generell lässt sich die vorgestellte Sensoranordnung und grundlegende Regelstrategie auch auf andere Anbaugeräte zur Bodenbearbeitung, wie z. B. einen Grubber, übertragen.

Weiterhin wurde die Erfindung am Beispiel eines heckseitigen Hubwerks 11 erläutert. Ebenso umfasst die Erfindung die Anwendung eines Fronthubwerks 29 für ein Anbaugerät.

Der Fall, dass das Anbaugerät 4 aufgrund der modifizierten EHR-Regelstrategie abgesenkt wird, kann bei einem Pflug das tiefere Eindringen der Pflugscharen 17a₁ bis 17a₄ in den Boden 5 oder bei einer Packerwalze einen erhöhten Andruck auf den Boden 5 zur Folge haben.

### Bezugszeichenliste

- 1: Vorrichtung
- 2: Fahrzeug
- 3: Hydraulische Betätigungseinheit
- 4: Anbaugerät
- 5: Boden
- 6: Fahrtrichtung
- 7: Bodendichtesensor
- 8: Hydropumpe
- 9: Regelventil
- 10: Hubwerkszylinder
- 11: Hubwerk
- 12: Unterlenker
- 13: Bedienteil
- 14: Lagesensor
- 15: Kraftsensor
- 16: Steuergerät
- 17a₁ bis 17a₄: Pflugscharen unterhalb des Trägers
- 17b₁ bis 17b₄: Pflugscharen oberhalb des Trägers
- 18: Geschwindigkeitssensor
- 19: Drehzahlsensor
- 20: Auswerteeinheit
- 21: Datenleitende Verbindungen
- 22: Fahrzeugsteuerung
- 23: Messwertwandler
- 24: Vergleichselement
- 25: Erste Eindringtiefe
- 26: Zweite Eindringtiefe
- 27: Bodenverdichtung
- 28: Höhenrichtung
- 29: Fronthubwerk
- 30: Träger

## Patentansprüche

1. Vorrichtung (1) für ein Fahrzeug (2) mit einer hydraulischen Betätigungseinheit (3) zur Regelung des Betriebs eines Anbaugeräts (4) an dem Fahrzeug (2), die Vorrichtung (1) um-fassend eine elektrohydraulische Hubwerksregelung, eine Auswerteeinheit (20) sowie datenleitende Verbindungen (21) hin zu einer Fahrzeugsteuerung (22) und einem der hydraulischen Betätigungseinheit (3) zugeordneten Steuergerät (16), **dadurch gekennzeichnet, dass** die Auswerteeinheit (20) dazu eingerichtet ist ein Verfahren umfassend die folgenden Schritte durchzuführen:
a) Bestimmen einer Bodendichte mittels mindestens eines Bodendichtesensors während der Fahrt des Fahrzeugs,
b) Vergleichen der ermittelten Bodendichte mit einem Grenzwert,
c) Abwandeln der Regelstrategie der elektrohydraulischen Hubwerksregelung, wenn der Grenzwert erreicht ist,
wobei der mindestens eine Bodendichtesensor (7) mit dem Steuergerät (16) in Verbindung steht und das Steuergerät (16) eingerichtet ist, die Regelstrategie der elektrohydraulischen Hubwerksregelung in Abhängigkeit von Signalen des Bodendichtesensors (7) abzuwandeln.

2. Vorrichtung (1) nach Patentanspruch 1, wobei der Bodendichtesensor (7) am Fahrzeug (2) angeordnet ist.

3. Vorrichtung (1) nach einem der vorhergehenden Patentansprüche, wobei eine Geschwindigkeitserfassungseinheit zur Ermittlung eines Antriebsschlupfes datenleitend mit der Auswerteeinheit (20) verbunden ist.

4. Vorrichtung (1) nach einem der vorhergehenden Patentansprüche, wobei die hydraulische Betätigungseinheit (3) ein Hubwerk (11) für das Anbaugerät (4) umfasst, das von der Auswerteeinheit (20) aktivierbar ist.

5. Vorrichtung (1) nach einem der vorhergehenden Patentansprüche, wobei die elektrohydraulische Hubwerksregelung einen doppelt wirkenden Hubwerkszylinder (10) für den Unterlenker (12) aufweist.

6. Verfahren zum Betrieb eines Fahrzeugs (2) mit einer hydraulischen Betätigungseinheit (3) zur Regelung des Betriebs eines Anbaugerätes (4) an dem Fahrzeug (2), wobei eine elektrohydraulische Hubwerksregelung mit einem Steuergerät (16) vorhanden ist, **dadurch gekennzeichnet, dass** das Verfahren zumindest die folgenden Schritte umfasst:
a) Bestimmen einer Bodendichte (27) mittels mindestens eines Bodendichtesensors (7) während der Fahrt des Fahrzeugs (2),
b) Vergleichen der ermittelten Bodendichte (27) mit einem Grenzwert,
c) Abwandeln der Regelstrategie der elektrohydraulischen Hubwerksregelung, wenn der Grenzwert erreicht ist,
wobei das Hubwerk im Rahmen von Schritt c) durch das Steuergerät automatisch aktiviert wird.

7. Verfahren nach Patentanspruch 6, wobei das Anbaugerät (4) abgesenkt wird.

8. Verfahren nach einem der vorhergehenden Patentansprüche 6 bis 7, wobei eine Abwandlung der Regelstrategie eine Änderung zumindest der Zugkraftgröße, des Schlupfwertes oder des Motordrehmoments umfasst.

## Claims

1. Device (1) for a vehicle (2) having a hydraulic actuating unit (3) for controlling the operation of an attachment (4) on the vehicle (2), the device (1) comprising an electrohydraulic lifting mechanism control system, an evaluation unit (20) and data-carrying connections (21) to a vehicle control system (22), and a control device (16) assigned to the hydraulic actuating unit (3),
**characterized in that** the evaluation unit (20) is configured to carry out a method comprising the following steps:
a) determining a soil density by means of at least one soil density sensor during the travel of the vehicle,
b) comparing the soil density determined with a limiting value,
c) modifying the control strategy of the electrohydraulic lifting mechanism control system when the limiting value is reached,
wherein the at least one soil density sensor (7) is connected to the control device (16) and the control device (16) is configured to modify the control strategy of the electrohydraulic lifting mechanism control system on the basis of signals from the soil density sensor (7).

2. Device (1) according to Claim 1, wherein the soil density sensor (7) is arranged on the vehicle (2).

3. Device (1) according to one of the preceding claims, wherein a speed detection unit for determining a drive slip has a data-carrying connection to the evaluation unit (20).

4. Device (1) according to one of the preceding claims, wherein the hydraulic actuating unit (3) comprises a lifting mechanism (11) for the attachment (4), which can be activated by the evaluation unit (20).

5. Device (1) according to one of the preceding claims, wherein the electrohydraulic lifting mechanism control system has a double-acting lifting mechanism cylinder (10) for the lower link (12).

6. Method for operating a vehicle (2) having a hydraulic actuating unit (3) for controlling the operation of an attachment (4) on the vehicle (2), wherein there is an electrohydraulic lifting mechanism control system having a control device (16), **characterized in that** the method comprises at least the following steps:
a) determining a soil density (27) by means of at least one soil density sensor (7) during the travel of the vehicle (2),
b) comparing the soil density (27) determined with a limiting value,
c) modifying the control strategy of the electrohydraulic lifting mechanism control system when the limiting value is reached,
wherein the lifting mechanism is activated automatically by the control device within the context of step c).

7. Method according to Claim 6, wherein the attachment (4) is lowered.

8. Method according to either of the preceding Claims 6 and 7, wherein a modification of the control strategy comprises changing at least one of the pulling force magnitude, the slip value or the engine torque.

## Revendications

1. Dispositif (1) pour un véhicule (2) muni d'une unité d'actionnement hydraulique (3) pour réguler le fonctionnement d'un outil porté (4) sur le véhicule (2), le dispositif (1) comprenant une commande de relevage électrohydraulique, une unité d'évaluation (20) ainsi que des liaisons de transmission de données (21) vers un système de commande de véhicule (22), et un appareil de commande (16) associé à l'unité d'actionnement hydraulique (3),
**caractérisé en ce que** l'unité d'évaluation (20) est conçue pour effectuer un procédé comprenant les étapes suivantes consistant à :
a) déterminer une densité du sol au moyen d'au moins un capteur de densité du sol pendant la marche du véhicule,
b) comparer la densité du sol déterminée à une valeur limite,
c) faire varier la stratégie de régulation de la commande de relevage électrohydraulique lorsque la valeur limite est atteinte,
dans lequel ledit au moins un capteur de densité du sol (7) communique avec l'appareil de commande (16), et l'appareil de commande (16) est conçu pour faire varier la stratégie de régulation de la commande de relevage électrohydraulique en fonction de signaux provenant du capteur de densité du sol (7).

2. Dispositif (1) selon la revendication 1, dans lequel le capteur de densité du sol (7) est disposé sur le véhicule (2).

3. Dispositif (1) selon l'une quelconque des revendications précédentes, dans lequel une unité de détection de vitesse est reliée en transmission de données à l'unité d'évaluation (20) pour déterminer un patinage d'entraînement.

4. Dispositif (1) selon l'une quelconque des revendications précédentes, dans lequel l'unité d'actionnement hydraulique (3) comprend un mécanisme de levage (11) pour l'outil porté (4) qui peut être activé par l'unité d'évaluation (20).

5. Dispositif (1) selon l'une quelconque des revendications précédentes, dans lequel la commande de relevage électrohydraulique présente un vérin de mécanisme de levage à double effet (10) pour le bras inférieur (12).

6. Procédé d'exploitation d'un véhicule (2) muni d'une unité d'actionnement hydraulique (3) pour réguler le fonctionnement d'un outil porté (4) sur le véhicule (2), dans lequel il existe une commande de relevage électrohydraulique munie d'un appareil de commande (16), **caractérisé en ce que** le procédé comprend au moins les étapes suivantes consistant à :
a) déterminer une densité du sol (27) au moyen d'au moins un capteur de densité du sol (7) pendant la marche du véhicule (2),
b) comparer la densité du sol (27) déterminée à une valeur limite,
c) faire varier la stratégie de régulation de la commande de relevage électrohydraulique lorsque la valeur limite est atteinte,
dans lequel le mécanisme de levage est activé automatiquement par l'appareil de commande dans le cadre de l'étape c).

7. Procédé selon la revendication 6, dans lequel l'outil porté (4) est abaissé.

8. Procédé selon l'une quelconque des revendications précédentes 6 et 7, dans lequel une variation de la stratégie de régulation comprend une modification au moins de la grandeur de force de traction, de la valeur de patinage ou du couple moteur.
